# EUROPÄISCHE PATENTSCHRIFT

(11) **EP 3 740 719 B1**
(45) Veröffentlichungstag und Bekanntmachung des Hinweises auf die Patenterteilung: **23.09.2026**
(21) Anmeldenummer: 19701310.5
(22) Anmeldetag: 15.01.2019
(51) Int. Cl.: F24D 19/10

(54) **VERFAHREN ZUM BETRIEB EINER HEIZUNGSANLAGE**
METHOD FOR OPERATING A HEATING SYSTEM
PROCÉDÉ POUR FAIRE FONCTIONNER UNE INSTALLATION DE CHAUFFAGE

(30) Priorität: 16.01.2018 DE 102018200653
(43) Veröffentlichungstag der Anmeldung: 25.11.2020
(73) Patentinhaber: KSB SE & Co. KGaA, 67227 Frankenthal (DE)
(72) Erfinder: ECKL, Martin, 67227 Frankenthal (DE); SCHULLERER, Joachim, 67227 Frankenthal (DE)
(86) Internationale Anmeldenummer: PCT/EP2019/050891
(87) Internationale Veröffentlichungsnummer: WO 2019/141663

(56) Entgegenhaltungen:
- EP-A1- 1 323 986
- EP-A1- 1 933 097
- EP-A1- 2 863 134
- EP-A2- 2 182 297

## Beschreibung

Die Erfindung betrifft ein Verfahren zum Betrieb einer Heizungsanlage mit wenigstens einem Heizkessel und wenigstens einer Umwälzpumpe.

Nach heutigem Stand der Technik schätzt die Kesselsteuerung den momentanen Heizbedarf der gesamten Heizungsanlage anhand der Außentemperatur ab. Unter Berücksichtigung der messtechnisch erfassten Außentemperatur wird sodann die Mediumtemperatur bedarfsgerecht durch die Steuereinheit des Heizkessels geregelt. Diese Vorgehensweise ist jedoch ungenau und unter Umständen nicht besonders energieeffizient, da beispielsweise an einem sonnigen Tag der Bedarf trotz niedriger Außentemperatur geringer ist. Eine solche Konstellation würde von der bestehenden Kesselsteuerung jedoch nicht erkannt und die geregelte Heizleistung unnötig hoch eingestellt werden.

Es ist daher wünschenswert, der Steuereinheit des Heizkessels weitere Größen zur Verfügung zu stellen, die charakteristisch für den tatsächlichen Wärmebedarf der Anlage sind.

Die EP 2 863 134 A1 offenbart ein Verfahren zum Anpassen der Steuerung der Vorlauftemperatur einer Heizungsanlage an ein zu beheizendes Gebäude.

Gelöst wird diese Aufgabe durch ein Verfahren gemäß den Merkmalen des Anspruchs 1. Vorteilhafte Ausgestaltungen des Verfahrens sind Gegenstand der abhängigen Ansprüche.

Erfindungsgemäß wird vorgeschlagen, dass die Umwälzpumpe der Heizungsanlage aus ein oder mehreren Betriebsparametern den aktuellen Wärmebedarf des beheizten Gebäudes ermittelt. Den bestimmten aktuellen Wärmebedarf teilt die Umwälzpumpe sodann einer Steuereinheit zur Steuerung und/oder Regelung des Heizkessels per Kommunikationsschnittstelle mit. Die Steuereinheit kann dann die Mediumtemperatur innerhalb des Heizkreislaufs unter Berücksichtigung des mitgeteilten Wärmebedarfs steuern bzw. regeln.

Kurz zusammengefasst sieht das erfindungsgemäße Verfahren vor, eine Kommunikation zwischen Umwälzpumpe und Heizkessel zu installieren, um Informationen bezüglich des aktuellen Heizbedarfs der Heizungsanlage austauschen zu können.

Erfindungsgemäß handelt es sich bei den ein oder mehreren Betriebsparametern um den aktuell vorliegenden Förderstrom innerhalb des Heizkreislaufs. Da der aktuelle Wärmebedarf des zu beheizenden Gebäudes durch die Ventilstellung der einzelnen Heizkörper des Heizkreislaufs bestimmt wird, kann die Umwälzpumpe anhand des momentanen Anlagenwiderstandes auf den jeweiligen Heizbedarf innerhalb der Anlage rückschließen. Dieser Anlagenwiderstand lässt sich über den Förderstrom ermitteln, der von der Umwälzpumpe bereitgestellt wird.

Üblicherweise reicht die Information über den Förderstrom alleine nicht als Information aus, um den entsprechenden Wärmebedarf der Anlage eindeutig zu bestimmen, denn die Entscheidung, ob ein bestimmter Förderstrom hoch oder niedrig ist, hängt wiederum von der Größe des Gebäudes ab. Vor diesem Hintergrund ist es erfindungsgemäß vorgesehen, wenn eine quantitative Bewertung des aktuell vorliegenden Förderstroms hinsichtlich des damit verbundenen Wärmebedarfs erfolgt, indem die Lage des aktuellen vorliegenden Förderstroms auf einer aktiven Regelkurve der Umwälzpumpe betrachtet wird. Üblicherweise wird die Drehzahl der Umwälzpumpe von der pumpeninternen Regelung anhand einer Regelkurve eingestellt, die bei der Pumpeninstallation durch den Heizungsbauer individuell für die zu beheizende Gebäudegröße bestimmt und festgelegt wird.

Besonders bevorzugt arbeitet die Umwälzpumpe mithilfe einer sogenannten Proportionaldruckkurve, die dem Förderstrom die passende Förderhöhe gegenüberstellt. Diese Regelkurve definiert die Relation zwischen Förderhöhe und Förderstrom durch die Pumpe. Unter Berücksichtigung einer solchen Regelkurve kann anhand des erfassten Förderstroms eine Bewertung des Förderstroms hinsichtlich des benötigten Wärmebedarfs erfolgen. Insbesondere wird die Lage des erfassten Förderstroms auf der Regelkurve betrachtet, um eine quantitative Einschätzung des erfassten Förderstromes zu ermöglichen. Liegt dieser im Bereich geringerer Förderströme (bspw. linker Kurvenbereich), so kann von einem geringen Wärmebedarf ausgegangen werden, wohingegen bei einer Lage im Bereich höherer Förderströme (rechter Kurvenbereich) von einem hohen Wärmebedarf auszugehen ist. Wesentlich für eine belastbare Bewertung auf Grundlage der Regelkurve ist natürlich, dass diese zuvor durch den Heizungsbauer richtig auf die Gebäudebedürfnisse angepasst wurde.

Es ist vorstellbar, dass die Umwälzpumpe über einen Durchflusssensor zur Erfassung des Förderstroms und/oder einen Drucksensor zur Erfassung des bereitgestellten Pumpendrucks (Förderhöhe) verfügt. Aus Kostengründen werden derartige Sensoren in der Praxis oftmals jedoch nicht verbaut. In einem solchen Fall kann die Pumpe ihren aktuellen Betriebspunkt, d.h. die Fördermenge und/oder Förderhöhe anhand der messbaren mechanischen Pumpenleistung und der eingestellten Drehzahl schätzen.

Der aktuelle Wärmebedarf des Gebäudes lässt sich jedoch nicht nur anhand des Förderstromes ermitteln. Ergänzend kann dieser mithilfe der erfassten Mediumtemperatur bestimmt werden. Die Mediumtemperatur lässt sich beispielsweise durch entsprechende Sensoren unmittelbar erfassen, kann jedoch alternativ mittels geeigneter Verfahren anhand sonstiger Betriebsgrößen der Umwälzpumpe mittelbar erfasst werden, so bspw. aus der Wicklungstemperatur und/oder dem Wicklungsstrom eines pumpeninternen Antriebsaggregates. Es wird auf die deutsche Patentanmeldung der Anmelderin mit dem amtlichen Aktenzeichen DE 10 2017 203 925.6 verwiesen.

Gemäß vorteilhafter Ausführung kann die Umwälzpumpe den aktuellen Wärmebedarf aus dem erfassten zeitlichen Verlauf der Mediumtemperatur über einen bestimmten Zeitraum bestimmen. Beispielsweise kann der Wärmebedarf anhand des zeitlichen Verlaufs der Mediumtemperatur während einer Abkühlphase des Heizkessels ermittelt werden, d.h. während einer Phase, während dessen der Heizkessel nicht heizt und die Mediumtemperatur demzufolge bis zu einem Neustart des Heizkessels abnimmt. Besonders bevorzugt wird der Wärmebedarf des Gebäudes anhand des ermittelbaren Temperaturabfalls während dieses Zeitraums bestimmt, d.h. abhängig davon wie schnell die Mediumtemperatur innerhalb des entsprechenden Zeitfensters tatsächlich absinkt. Ein schnellerer Temperaturabfall ist ein Indikator für einen hohen Wärmebedarf innerhalb des Gebäudes, während ein langsamer Temperaturabfall auf einen geringeren Wärmebedarf hinweist.

Die Kommunikation zwischen Steuereinheit und Umwälzpumpe zur Übertragung des jeweiligen Wärmebedarfs kann beispielsweise mittels analoger oder digitaler Datenverbindung erfolgen. Als Kommunikationsschnittstelle ist eine serielle Schnittstelle bevorzugt. Für einen digitalen Datenaustausch kann exemplarisch ein ModBus-Protokoll zum Einsatz kommen.

Die Steuereinheit für die Steuerung und Regelung des Heizungskessels kann beispielsweise eine zentrale Anlagensteuerung oder alternativ eine interne Steuereinheit des Heizkessels sein.

Vorliegend wurde bei dem erfindungsgemäßen Verfahren stets davon ausgegangen, dass die Umwälzpumpe den Wärmebedarf anhand ein oder mehrerer erfasster Betriebsparameter ermittelt. Es ist jedoch genauso gut vorstellbar, dass die Umwälzpumpe lediglich die ein oder mehreren Betriebsparameter über die Schnittstelle an die Steuereinheit zur Steuerung des Heizkessels überträgt und eine entsprechende Auswertung zur Ermittlung des tatsächlichen Wärmebedarfs erst in der Steuerungseinheit erfolgt.

Neben den erfassten Betriebsparametern muss auch eine etwaige Regelkurve der Umwälzpumpe an die Steuereinheit übertragen werden. Bis auf den Ort der Ermittlung des Wärmebedarfs unterscheidet sich dieses Verfahren jedoch nicht von den vorherigen Ausführungen.

Neben dem erfindungsgemäßen Verfahren betrifft die vorliegende Erfindung zudem eine Umwälzpumpe für eine Heizungsanlage, wobei sich diese durch eine Pumpensteuerung zur Bestimmung des aktuellen Wärmebedarfs des beheizten Gebäudes aus ein oder mehreren Betriebsparametern auszeichnet. Zusätzlich umfasst die Umwälzpumpe wenigstens eine Kommunikationsschnittstelle, die derart ausgeführt ist, sodass mittels der Pumpensteuerung über die Schnittstelle der aktuelle Wärmebedarf an eine externe Steuereinheit, insbesondere eine zentrale Anlagensteuerung und/oder eine interne Steuereinheit eines Heizkessels übertragbar ist.

Ferner kann die Umwälzpumpe Mittel zur mittelbaren und/oder unmittelbaren Erfassung des aktuell vorliegenden Förderstroms und/oder des zeitlichen Verlaufs der Mediumtemperatur aufweisen. Darüber hinaus ist die Pumpensteuerung derart programmiert, um den Wärmebedarf anhand des erfassten Förderstroms und einer aktiven Regelkurve und gegebenenfalls anhand eines Temperaturabfalls der Mediumtemperatur zu bestimmen. Zur Vermeidung von Wiederholungen wird bezüglich der genauen Vorgehensweise und der konkreten Programmierung der Pumpensteuerung auf die vorgenannten Ausführungen zum erfindungsgemäßen Verfahren verwiesen.

Weitere Vorteile und Eigenschaften der Erfindung sollen anhand eines in den Figuren dargestellten Ausführungsbeispiels näher erläutert werden. Es zeigen:
- Figur 1:: eine schematische Übersicht einer erfindungsgemäßen Heizungsanlage mit einer Umwälzpumpe sowie einem Heizkessel und
- Figur 2:: eine Diagrammdarstellung des Förderstroms gegenüber der Förderhöhe mit eingezeichneter Anlagenkennlinie und Regelkurve.

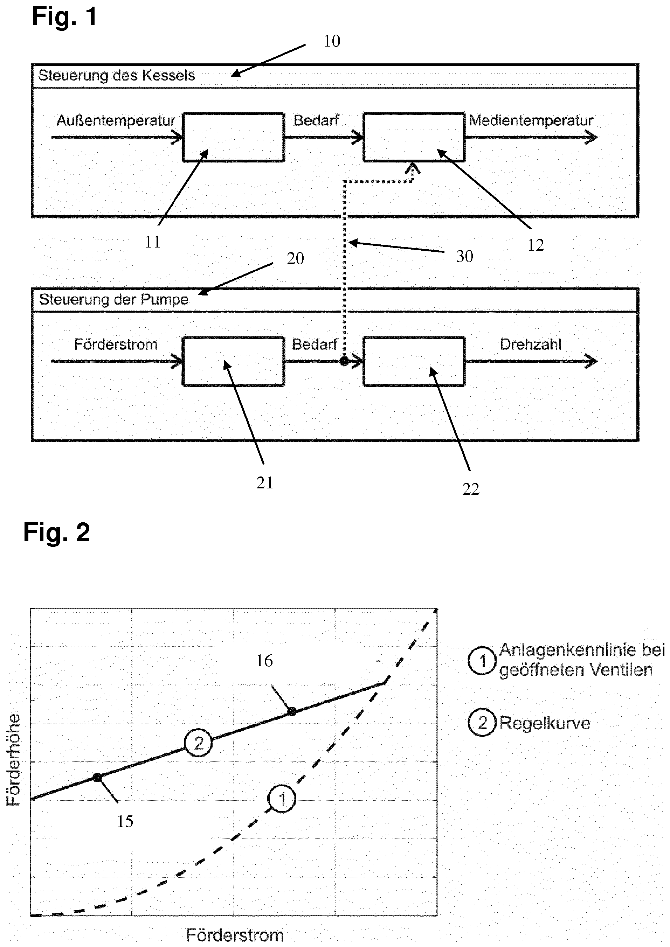

Figur 1 zeigt die Steuereinheit des Heizkessels 10, die unter Berücksichtigung der Außentemperatur den jeweiligen Wärmebedarf der Anlage ermittelt. Zunächst wird der Bedarfswert anhand der erfassten Außentemperatur ermittelt (Block 11) und auf Grundlage dieses Anlagenbedarfs im Regelungsblock 12 die entsprechende Mediumtemperatur des Heizwassers innerhalb der Heizungsanlage bestimmt. Gemäß dem erfindungsgemäßen Verfahren wird der intern ermittelte Anlagenbedarf mit einem zusätzlichen Bedarfswert überlagert, der über eine externe Schnittstelle 30 empfangen wird. Die Bereitstellung des externen Bedarfswertes erfolgt durch die Umwälzpumpe der Heizungsanlage.

Die Steuerung der Umwälzpumpe ist mit dem Bezugszeichen 20 gekennzeichnet. Diese arbeitet mit einer konventionellen Proportionaldruckregelung mit einer Soll-Drehzahl als Ausgangsgröße. Hierzu wird auf Grundlage des ermittelten Förderstroms, der als Indikator für den momentanen Anlagenwiderstand und somit für die aktuellen Ventilstellungen der Heizkörper dient, der entsprechende Wärmebedarf innerhalb der Heizungsanlage bestimmt (Block 21). Auf Grundlage des Wärmbedarfs stellt die Proportionaldruckregelung im Block 22 die passende Drehzahl der Umwälzpumpe ein, um einen möglichst energiesparenden Betrieb zu gewährleisten.

Der pumpenintern auf Grundlage des Förderstroms ermittelte Bedarfswert wird zusätzlich der Steuereinheit 10 des Heizkessels zur Verfügung gestellt, und zwar über die Kommunikationsschnittstelle 30. Diese kann nun den intern in der Kesselsteuerung ermittelten Wärmebedarf mittels des von der Umwälzpumpe empfangenen Bedarfswertes korrigieren und dadurch gegebenenfalls die Soll-Mediumtemperatur reduzieren, um den Energieverbrauch des Kessels zu reduzieren.

Der in Block 21 ermittelte Wärmebedarf der Umwälzpumpe lässt sich, wie bereits erläutert, anhand des vorliegenden Förderstroms Q bestimmen. Allerdings reicht der Förderstrom alleine nicht als Information aus, um den tatsächlichen Wärmebedarf des Gebäudes zu ermitteln, denn die Entscheidung, ob ein bestimmter Förderstrom hoch oder niedrig ist, hängt ebenfalls von der Größe des Gebäudes ab. Daher zieht die Umwälzpumpe zusätzlich die eingestellte Proportionaldruckkurve für die Bedarfsermittlung hinzu. Die herangezogene Regelkurve wurde üblicherweise vom Heizungsbauer bei der Installation der Anlage so eingestellt, dass sie zum erwarteten Bedarf des jeweiligen Gebäudes passt.

Figur 2 zeigt die Verlustkennlinie eines Gebäudes (Anlagenkennlinie), wenn alle Thermostatventile vollständig geöffnet sind. Diese Anlagenkennlinie ist in der Figur 2 mit dem Bezugszeichen 1 gekennzeichnet. Weiterhin zeigt das Bild die eingestellte Proportionaldruckkurve 2. Diese wird vom Heizungsbauer derart eingestellt, dass sie sicher über der Verlustkurve 1 des Gebäudes liegt.

Mit diesen Informationen kann die Pumpe den momentanen Wärmebedarf des Gebäudes ermitteln. Liegt der aktuelle Förderstrom in der Darstellung auf dem linken Kurvenabschnitt der Regelkurve 2 (Betriebspunkt 15), dann ist der aktuelle Wärmebedarf vergleichsweise niedrig. Liegt der Förderstrom stattdessen jedoch auf dem rechten Kurvenabschnitt der Regelkurve 2 (hier Betriebspunkt 16), dann ist der Bedarf vergleichsweise hoch.

## Patentansprüche

1. Verfahren zum Betrieb einer Heizungsanlage mit wenigstens einem Heizkessel und wenigstens einer Umwälzpumpe, wobei die Umwälzpumpe aus ein oder mehreren Betriebsparametern den aktuellen Wärmebedarf des beheizten Gebäudes ermittelt und diesen an eine Steuereinheit zur Steuerung und/oder Regelung des Heizkessels kommuniziert, und wobei die Steuereinheit die Mediumtemperatur unter Berücksichtigung des mitgeteilten Wärmebedarfs steuert und/oder regelt, wobei es sich bei den ein oder mehreren Betriebsparametern um den aktuell vorliegenden Förderstrom handelt, **dadurch gekennzeichnet, dass** zur Ermittlung des aktuellen Wärmebedarfs durch die Umwälzpumpe eine quantitative Bewertung des aktuell vorliegenden Förderstroms hinsichtlich des Wärmebedarfs erfolgt, indem die Lage des aktuellen vorliegenden Förderstroms auf einer aktiven Regelkurve der Umwälzpumpe betrachtet wird.

2. Verfahren nach Anspruch 1, **dadurch gekennzeichnet, dass** es sich bei der Regelkurve um eine eingestellte Proportionaldruckkurve handelt, wobei zur Bewertung des Förderstroms hinsichtlich des benötigten Wärmebedarfs die Lage des aktuellen Förderstroms auf der betrachteten Regelkurve betrachtet wird.

3. Verfahren nach einem der vorhergehenden Ansprüche, **dadurch gekennzeichnet, dass** der aktuelle Wärmebedarf des Gebäudes mithilfe der erfassten Mediumtemperatur bestimmt wird, und die Umwälzpumpe den aktuellen Wärmebedarf aus dem erfassten zeitlichen Verlauf der Mediumtemperatur bestimmt, insbesondere aus dem daraus bestimmten Temperaturabfall ableitet.

4. Verfahren nach einem der vorhergehenden Ansprüche, **dadurch gekennzeichnet, dass** eine Kommunikation zwischen Steuereinheit und Umwälzpumpe mittels analoger oder digitaler Datenverbindung erfolgt, bspw. über eine serielle Schnittstelle.

5. Verfahren nach einem der vorhergehenden Ansprüche, **dadurch gekennzeichnet, dass** es sich bei der Steuereinheit um eine zentrale Anlagensteuerung oder eine interne Steuereinheit des Heizkessels handelt.

6. Verfahren zum Betrieb einer Heizungsanlage mit wenigstens einem Heizkessel und wenigstens einer Umwälzpumpe, wobei die Umwälzpumpe als ein oder mehrere Betriebsparameter den aktuell vorliegenden Förderstrom erfasst und diesen zusammen mit einer Regelkurve der Umwälzpumpe an eine Steuereinheit zur Steuerung und/oder Regelung des Heizkessels kommuniziert, wobei die Steuereinheit den aktuellen Wärmebedarf des beheizten Gebäudes durch eine quantitative Bewertung des empfangenen Förderstroms hinsichtlich des Wärmebedarfs durch Betrachtung der Lage des empfangenen Förderstroms auf der empfangenen Regelkurve der Umwälzpumpe ermittelt und die Mediumtemperatur unter Berücksichtigung des bestimmten Wärmebedarfs steuert und/oder regelt.

7. Umwälzpumpe für eine Heizungsanlage mit einer Pumpensteuerung zur Bestimmung des aktuellen Wärmebedarfs des beheizten Gebäudes aus ein oder mehreren Betriebsparametern und wenigstens einer Kommunikationsschnittstelle zur Übertragung des aktuellen Wärmebedarfs an eine externe Steuereinheit, insbesondere eine zentrale Anlagensteuerung und/oder eine interne Steuereinheit eines Heizkessels, wobei die Umwälzpumpe Mittel zur mittelbaren oder unmittelbaren Erfassung des aktuell vorliegenden Förderstroms aufweist, **dadurch gekennzeichnet, dass** die Pumpensteuerung derart programmiert ist, um den Wärmebedarf anhand des erfassten Förderstroms und einer aktiven Regelkurve zu bestimmen, wobei zur Ermittlung des aktuellen Wärmebedarfs eine quantitative Bewertung des aktuell vorliegenden Förderstroms hinsichtlich des Wärmebedarfs erfolgt, indem die Lage des aktuellen vorliegenden Förderstroms auf einer aktiven Regelkurve der Umwälzpumpe betrachtet wird.

8. Umwälzpumpe nach Anspruch 7, **dadurch gekennzeichnet, dass** die Umwälzpumpe Mittel zur mittelbaren oder unmittelbaren Erfassung des zeitlichen Verlauf der Mediumtemperatur aufweist und dass die Pumpensteuerung derart programmiert ist, um den Wärmebedarf anhand eines Temperaturabfalls der Mediumtemperatur zu bestimmen.

## Claims

1. Method for operating a heating system having at least one boiler and at least one circulating pump, wherein the circulating pump ascertains the current heat demand of the heated building from one or more operating parameters and communicates this to a control unit for open- and/or closed-loop control of the boiler, and wherein the control unit applies open- and/or closed-loop control to the medium temperature taking account of the communicated heat demand, wherein the one or more operating parameters comprise the currently available delivery rate, **characterized in that** to ascertain the current heat demand by the circulating pump, the currently available delivery rate is quantitatively assessed with regard to heat demand by way of the position of the current available delivery rate on an active closed-loop control curve of the circulating pump being taken into consideration.

2. Method according to Claim 1, **characterized in that** the closed-loop control curve is a set proportional pressure curve, wherein to assess the delivery rate with regard to the required heat demand, the position of the current delivery rate on the considered closed-loop control curve is considered.

3. Method according to either one of the preceding claims, **characterized in that** the building's current heat demand is determined by way of the acquired medium temperature, and the circulating pump determines the current heat demand from the acquired time profile of the medium temperature, in particular derives it from the temperature drop determined therefrom.

4. Method according to any one of the preceding claims, **characterized in that** communication between control unit and circulating pump proceeds by means of an analogue or digital data link, for example via a serial interface.

5. Method according to any one of the preceding claims, **characterized in that** the control unit comprises a central system controller or an internal control unit of the boiler.

6. Method for operating a heating system having at least one boiler and at least one circulating pump, wherein the circulating pump acquires the currently available delivery rate as one or more operating parameters and communicates this together with a closed-loop control curve of the circulating pump to a control unit for open- and/or closed-loop control of the boiler, wherein the control unit ascertains current heat demand of the heated building by quantitative assessment of the received delivery rate with regard to heat demand by taking into consideration the position of the received delivery rate on the received closed-loop control curve of the circulating pump and applies open- and/or closed-loop control to the medium temperature taking account of the specific heat demand.

7. Circulating pump for a heating system with a pump controller for determining the current heat demand of the heated building from one or more operating parameters and at least one communication interface for transmitting the current heat demand to an external control unit, in particular a central system controller and/or an internal control unit of a boiler, wherein the circulating pump has means for indirect or direct acquisition of the currently available delivery rate, **characterized in that** the pump controller is programmed to determine the heat demand on the basis of the acquired delivery rate and an active closed-loop control curve, wherein to ascertain the current heat demand, the currently available delivery rate is quantitatively assessed with regard to heat demand by way of the position of the current available delivery rate on an active closed-loop control curve of the circulating pump being taken into consideration.

8. Circulating pump according to Claim 7, **characterized in that** the circulating pump has means for indirect or direct acquisition of the time profile of the medium temperature, and **in that** the pump controller is programmed to determine the heat demand on the basis of a temperature drop of the medium temperature.

## Revendications

1. Procédé pour faire fonctionner une installation de chauffage avec au moins une chaudière et au moins une pompe de circulation, la pompe de circulation déterminant le besoin en chaleur actuel du bâtiment chauffé à partir d'un ou de plusieurs paramètres de fonctionnement et communiquant ledit besoin en chaleur actuel à une unité de commande pour la commande et/ou la régulation de la chaudière, et l'unité de commande commandant et/ou régulant la température de milieu en tenant compte du besoin en chaleur communiqué, le ou les plusieurs paramètres de fonctionnement étant le flux de transport actuellement présent, **caractérisé en ce que** pour déterminer le besoin en chaleur actuel de la pompe de circulation, une évaluation quantitative du flux de transport actuellement présent en termes de besoin en chaleur étant effectuée en considérant la position du flux de transport actuellement présent sur une courbe de régulation active de la pompe de circulation.

2. Procédé selon la revendication 1, **caractérisé en ce que** la courbe de régulation est une courbe de pression proportionnelle réglée, la position du flux de transport actuel sur la courbe de régulation considérée étant prise en compte pour l'évaluation du flux de transport en termes de besoin en chaleur nécessaire.

3. Procédé selon l'une des revendications précédentes, **caractérisé en ce que** le besoin en chaleur actuellement présent du bâtiment est défini à l'aide de la température de milieu détectée et la pompe de circulation définit le besoin en chaleur actuel à partir de l'évolution dans le temps détectée de la température de milieu, en particulier à partir de la chute de température définie sur cette base.

4. Procédé selon l'une des revendications précédentes, **caractérisé en ce qu'**une communication entre l'unité de commande et la pompe de circulation est effectuée au moyen d'une liaison de données analogique ou numérique, par exemple par une interface série.

5. Procédé selon l'une des revendications précédentes, **caractérisé en ce que** l'unité de commande est une unité d'installation centrale ou une unité de commande interne de la chaudière.

6. Procédé pour faire fonctionner une installation de chauffage avec au moins une chaudière et au moins une pompe de circulation, la pompe de circulation détectant le flux de transport actuellement présent comme un ou plusieurs paramètres de fonctionnement et communiquant ledit flux de transport conjointement avec une courbe de régulation de la pompe de circulation à une unité de commande pour la commande et/ou la régulation de la chaudière, l'unité de commande déterminant le besoin en chaleur actuel du bâtiment chauffé par une évaluation quantitative du flux de transport reçu en termes de besoin en chaleur en considérant la position du flux de transport reçu sur la courbe de régulation reçue de la pompe de circulation et commandant et/ou régulant la température de milieu en tenant compte du besoin en chaleur défini.

7. Pompe de circulation pour une installation de chauffage, avec une commande de pompe pour définir le besoin en chaleur actuel du bâtiment chauffé à partir d'un ou de plusieurs paramètres de fonctionnement et au moins une interface de communication pour transmettre le besoin en chaleur actuel à une unité de commande externe, en particulier une commande centrale et/ou une unité de commande interne d'une chaudière, la pompe de circulation comportant des moyens pour détecter indirectement ou directement le flux de transport actuellement présent, **caractérisée en ce que** la commande de pompe est programmée de manière à définir le besoin en chaleur à l'aide du flux de transport détecté et d'une courbe de régulation active, pour déterminer le besoin en chaleur actuel, une évaluation quantitative du flux de transport actuellement présent étant effectuée en termes de besoin en chaleur en considérant la position du flux de transport actuellement présent sur une courbe de régulation active de la pompe de circulation.

8. Pompe de circulation selon la revendication 7, **caractérisée en ce que** la pompe de circulation comporte des moyens pour détecter indirectement ou directement l'évolution dans le temps de la température de milieu, et que la commande de pompe est programmée de manière à définir le besoin en chaleur à l'aide d'une chute de température de la température de milieu.
